# EUROPÄISCHE PATENTANMELDUNG

(11) **EP 1 286 261 A1**
(43) Veröffentlichungstag der Anmeldung: **26.02.2003**
(21) Anmeldenummer: 01440261.4
(22) Anmeldetag: 13.08.2001
(51) Int. Cl.: G06F 9/44

(54) **Verfahren, Bedienoberflächenmodul, Zwischenmodule sowie damit ausgestattetes Netzwerk-Management-System zur Bedienung eines Bedienoberflächenmoduls**

(71) Anmelder: ALCATEL, 75008 Paris (FR)
(72) Erfinder: Tillmanns, Heinz, 14532 Stahndorf (DE)
(74) Vertreter: Rausch, Gabriele, Dr.

(57) **Zusammenfassung**

Die vorliegende Erfindung betrifft ein Verfahren zur Bedienung eines ersten Bedienoberflächenmoduls (PUI1-PUI4), das erste Ausgabebefehle (MP1, 11, MP3, MP4) zur Ausgabe einer ersten Bedienoberfläche an Ausgabemitteln (O1, O2) erzeugen und auf die erste Bedienoberfläche bezogene Eingabebefehle empfangen kann. Die Erfindung betrifft ferner ein (zweites) Bedienoberflächenmodul (CUI1-CUI3) hierfür, Zwischenmodule (IM) hierfür sowie ein Netzwerk-Management-System oder einen Rechner eines Netzwerk-Management-Systems, die mit einem derartigen Bedienoberflächenmodul (CUI1-CUI3) und/oder Zwischenmodul (IM) hierfür ausgestattet sind.

Bei dem Verfahren werden die ersten Ausgabebefehle (MP1, 11, MP3, MP4) oder Kopien von diesen an ein zweites Bedienoberflächenmodul (CUI1-CUI3) übermittelt, das in Abhängigkeit von diesen zweite Ausgabebefehle (MI1, 16, MI3) zur Ausgabe einer zweiten Bedienoberfläche an den Ausgabemitteln (O1, O2) erzeugt. Das zweite Bedienoberflächenmodul (CUI1-CUI3) empfängt von Bedienereingaben abhängige, auf die zweite Bedienoberfläche bezogene zweite Eingabebefehle (CI1, 23, CI3) und erzeugt in Abhängigkeit von diesen auf die erste Bedienoberfläche bezogene erste Eingabebefehle (CP1, 24, CP3, CP4), welche an das erste Bedienoberflächenmodul (PUI1-PUI4) übermittelt werden.

## Beschreibung

Die vorliegende Erfindung betrifft ein Verfahren zur Bedienung eines ersten Bedienoberflächenmoduls, das erste Ausgabebefehle zur Ausgabe einer ersten Bedienoberfläche an Ausgabemitteln erzeugen und auf die erste Bedienoberfläche bezogene Eingabebefehle empfangen kann. Die Erfindung betrifft ferner ein (zweites) Bedienoberflächenmodul hierfür, Zwischenmodule hierfür sowie ein Netzwerk-Management-System oder einen Rechner eines Netzwerk-Management-Systems, die mit einem derartigen Bedienoberflächenmodul und/oder Zwischenmodul(en) hierfür ausgestattet sind.

In zunehmendem Maße können verschiedenartigste Vorrichtungen, beispielsweise Telefonanlagen, Gebäudetechnikeinrichtungen, Navigationssysteme oder dergleichen mittels sogenannter graphischer Bedienoberflächen, sogenannter Graphical User Interfaces (GUI), bedient werden. Die Bedienoberflächen werden durch Rechnersysteme, beispielsweise Personal Computer, ausgegeben. Eine Bedienoberfläche zeigt einen oder mehrere Zustände der durch sie bedienbaren Vorrichtung an. Der Bediener der Bedienoberfläche kann beispielsweise mittels einer Tastatur oder einer Maus Befehle an der Bedienoberfläche eingeben, welche die Bedienoberfläche dann an die durch sie bedienbare Vorrichtung weiterleitet.

Bedienoberflächen werden typischerweise durch Bedienoberflächenmodule generiert, deren Programmcode von einem Rechner ausgeführt wird. Die Bedienoberflächenmodule senden Ausgabebefehle an den Rechner, anhand derer dieser die jeweilige Bedienoberfläche generiert, beispielsweise ein Symbol der zu bedienenden Vorrichtung anzeigt. Wenn der Bediener der Bedienoberfläche Befehle eingibt, beispielsweise mittels einer Tastatur, werden die jeweiligen Eingabebefehle durch den Rechner an das Bedienoberflächenmodul geleitet.

Aus Sicht eines Bedieners sind Bedienoberflächen idealerweise gleichartig ausgestaltet, d.h. insbesondere, dass bei verschiedenen Bedienoberflächen dasselbe Bedienkonzept verfolgt wird. Beispielsweise ist bei Windows-Programmen bekannt, dass der jeweils links außen stehende Menüpunkt "Datei" lautet. Darüber hinaus ist es wünschenswert, dass verschiedene Bedienoberflächen möglichst gleichartig aussehen, also einem sogenannten Styleguide folgen, d.h. dass das Aussehen der verschiedenen Bedienoberflächen möglichst gleich ist. Kurz gesagt, der Bediener wünscht sich ein einheitliches "look and feel".

Dies lässt sich jedoch in der Praxis vielfach nicht verwirklichen. Beispielsweise kann es bei einem Netzwerk-Management-System der Fall sein, dass eine Vermittlungsstelle durch eine Bedienoberfläche eines ersten Herstellers, ein Call-Center durch eine Bedienoberfläche eines zweiten Herstellers und eine Datenbank durch eine Bedienoberfläche eines dritten Herstellers bedient werden müssen. Jeder Hersteller liefert für seine jeweilige Vorrichtung eine eigene Bedienoberfläche. Der Bediener des Netzwerk-Management-Systems muss sich dann auf die unterschiedlichen Bedienoberflächen einstellen, d.h., dass beispielsweise bei einer Bedienoberfläche eine Störungsmeldung durch einen roten Leuchtpunkt und bei einer anderen Bedienoberfläche durch einen gelben Leuchtpunkt und eine akustische Signalisierung angezeigt wird. Dies ist für den Bediener nur schwer handhabbar, so dass Fehlbedienungen wahrscheinlich werden.

Eine Lösung könnte zwar beispielsweise darin bestehen, dass eine gemeinsame Oberfläche entwickelt wird, mit der alle vom jeweiligen Netzwerk-Management-System zu bedienenden Vorrichtungen bedienbar sind. Die Herstellung einer solchen Bedienoberfläche ist jedoch nicht nur kompliziert und teuer, sondern zudem in vielen Fällen unmöglich, da die Schnittstelle zwischen einer Vorrichtung und der proprietären Bedienoberfläche, mit der die Vorrichtung bedienbar ist, häufig von den jeweiligen Herstellern der Vorrichtung und der dazugehörigen proprietären Bedienoberfläche nicht offengelegt wird. Es kann sogar sein, dass eine proprietäre Bedienoberfläche mit der durch sie bedienbaren Vorrichtung untrennbar verbunden ist, beispielsweise kann ein Bedienoberflächenmodul ein Bestandteil einer durch die bedienbaren Datenbankapplikation sein.

Es ist daher Aufgabe der vorliegenden Erfindung, die Bedienung eines oder mehrerer vorhandener, proprietärer Bedienoberflächenmodule zu vereinfachen.

Zur Lösung dieser Aufgabe sind vorgesehen: ein Verfahren gemäß der technischen Lehre des Anspruches 1, ein Bedienoberflächenmodul, Zwischenmodule sowie ein Netzwerk-Management-System oder ein Rechner eines Netzwerk-Management-Systems mit einer solchen Bedienoberflächenmodul oder Zwischenmodul gemäß weiterer unabhängiger Ansprüche.

Der Erfindung liegt dabei der Gedanke zu Grunde, dass vor oder neben ein proprietäres Bedienoberflächenmodul, das zur Bedienung einer Vorrichtung, beispielsweise eines Netzelements eines Telekommunikationsnetzes, vorgesehen ist, ein zweites Bedienoberflächenmodul geschaltet wird. Die Verbindung zwischen dem ersten Bedienoberflächenmodul und der durch sie gesteuerten und überwachten Vorrichtung bleibt erhalten, während die Verbindung zwischen dem ersten Bedienoberflächenmodul und Ein-/Ausgabemitteln über das zweite Bedienoberflächenmodul führen.

Das erste Bedienoberflächenmodul ist beispielsweise ein herstellerspezifisches, proprietäres Bedienoberflächenmodul, während das zweite Bedienoberflächenmodul optimal an die Bedürfnisse des Bedieners angepasst ist, beispielsweise ein gewünschtes "look and feel" aufweist. Die vom ersten Bedienoberflächenmodul gesendeten Ausgabebefehle zur Erzeugung der ersten Bedienoberfläche werden dem zweiten Bedienoberflächenmodul übermittelt, so dass dieses sozusagen weiß, wie die erste Bedienoberfläche aktuell auszusehen hat. Das zweite Bedienoberflächenmodul gestaltet dann in Abhängigkeit von der ersten Bedienoberfläche seine eigene, zweite Bedienoberfläche, bei der beispielsweise bei einer Fehlermeldung der zu bedienenden Bedienoberfläche ein roter Leuchtpunkt erzeugt wird und nicht wie bei der ersten Bedienoberfläche ein gelber. Wenn der Bediener bei der zweiten Bedienoberfläche eine Eingabe tätigt, beispielsweise auf den vorgenannten roten Leuchtpunkt mit der Maus klickt, beispielsweise um die Fehlerursache in Volltext zu erfahren, so wird diese Eingabe als zweite Eingabebefehle an das zweite Bedienoberflächenmodul übermittelt, welches aus den auf die zweite Bedienoberfläche bezogenen Eingabebefehlen auf die erste Bedienoberfläche bezogene, erste Eingabebefehle erzeugt, die dann an das erste Bedienoberflächenmodul übermittelt werden. Das zweite Bedienoberflächenmodul simuliert sozusagen eine Bedienereingabe bezüglich der ersten Bedienoberfläche, d.h., aus Sicht des ersten Bedienoberflächenmoduls sieht es so aus, als sei eine Eingabe an seiner Bedienoberfläche gemacht worden.

Es versteht sich, dass das zweite Bedienoberflächenmodul auf diese Weise auch weitere proprietäre Bedienoberflächenmodule bedienen kann, wobei ein gemeinsames "look and feel" für alle unterlagerten proprietären Bedienoberflächenmodule bereitgestellt wird. Verschiedene Bedienoberflächen lassen sich auf einfache und preisgünstige Weise unter einer gemeinsamen Bedienoberfläche integrieren.

Die Schnittstelle zwischen dem oder den proprietären Bedienoberflächenmodul(en) und den oder der durch sie bedienbaren Vorrichtung(en) bleibt durch die Erfindung unberührt, so dass sie für eine Entwicklung eines erfindungsgemäßen Bedienoberflächenmoduls nicht bekannt sein muss. Zudem bleiben unter Umständen sehr wesentliche Funktionen eines proprietären Bedienoberflächenmoduls erhalten, beispielsweise Plausibilitätsprüfungen bei Bedienereingaben.

Vorteilhafte Ausgestaltungen der Erfindung ergeben sich aus den abhängigen Ansprüchen sowie aus der Beschreibung.

Prinzipiell können sowohl die erste, proprietäre Bedienoberfläche, als auch die zweite, dieser funktional beispielsweise vorgelagerten oder nebengeordneten Bedienoberfläche parallel dargestellt werden, beispielsweise auf unterschiedlichen Bildschirmen oder auf zwei Bildschirmbereichen nebeneinander. Vorteilhafterweise ist jedoch vorgesehen, dass die die erste Bedienoberfläche betreffenden Ausgabebefehle zumindest teilweise abgefangen und verworfen werden. Die erste, proprietäre Bedienoberfläche wird dann nicht oder allenfalls eingeschränkt ausgegeben. Die erste, proprietäre Bedienoberfläche kann für den Bendiener aber auch völlig unsichtbar sein. Beispielsweise kann sie auf einen virtuellen Bildschirmbereich verlagert sein, der auf einem realen, sichtbaren Bildschirmbereich nicht dargestellt wird.

Zweckmäßigerweise werden die den Bedienoberflächen prinzipiell zur Verfügung stehenden Ausgabemittel oder sonstige, den Ausgabemitteln zugeordnete Ressourcen nicht vorrangig für das erste, proprietäre Bedienoberflächenmodul, sondern für das zweite Bedienoberflächenmodul bereitgestellt. Wenn beispielsweise eine Farbe aus einer Farbtabelle, die jede Farbe nur einmal bereitstellt, zu vergeben ist, wird diese bevorzugt dem zweiten Bedienoberflächenmodul zur Verfügung gestellt, so dass dieses eine optimale Farbdarstellung erhält. Dazu kann beispielsweise das zweite Bedienoberflächenmodul vor dem ersten Bedienoberflächenmodul in Betrieb genommen werden, so dass für das erste Bedienoberflächenmodul nur die vom zweiten Bedienoberflächenmodul nicht genutzten Ausgabemittel und diesen zugeordnete Ressourcen bereitgestellt werden.

Es ist zwar prinzipiell denkbar, dass Bedienoberflächenmodule unmittelbar auf Ausgabemittel zugreifen, beispielsweise Grafikbefehle unmittelbar an die zur Ausgabe vorgesehene Grafikkarte senden. Vorzugsweise ist jedoch zur Steuerung der Ausgabemittel ein Ausgabemodul vorgesehen. Dies kann beispielsweise ein Teil des jeweils verwendeten Betriebssystems sein oder, beispielsweise in einer X-Window-Umgebung, ein sogenannter X-Server. In einer solchen Umgebung ist es besonders einfach, das zweite Bedienoberflächenmodul sozusagen zwischen das erste Bedienoberflächenmodul und das Ausgabemodul zu schalten. Das zweite Bedienoberflächenmodul kann die Kommunikation zwischen dem ersten Bedienoberflächenmodul und dem Ausgabemodul zumindest mithören oder sogar vollständig anstelle des Ausgabemoduls empfangen, wobei die Ausgabebefehle des ersten Bedienoberflächenmoduls an das zweite Bedienoberflächenmodul umgeleitet werden.

Was im vorigen Absatz in Bezug auf die Ausgabemittel erläutert wurde, gilt sinngemäß auch für die Eingabemittel, beispielsweise Tastatur und Maus: Auch diese werden vorzugsweise durch ein Eingabemodul, z.B. einen X-Server, überwacht, welches die auf die zweite Bedienoberfläche bezogenen zweiten Eingabebefehle an das zweite Bedienoberflächenmodul übermittelt.

Prinzipiell ist es auch möglich, dass nicht nur (erste) Eingabebefehle der zweiten Bedienoberfläche, sondern auch direkt an den Eingabemitteln eingegebene, auf die erste Bedienoberfläche bezogene erste Eingabebefehle an das erste Bedienoberflächenmodul übermittelt werden, so dass ein Bediener eine Vorrichtung nicht nur über die zweite, komfortable Bedienoberfläche, sondern auch über die erste, proprietäre Bedienoberfläche bedienen kann.

Vorzugsweise ist zwischen das erste und das zweite Bedienoberflächenmodul ein Zwischenmodul geschaltet, welches die vom ersten Bedienoberflächenmodul empfangenen Ausgabebefehle oder Kopien von diesen an das zweite Bedienoberflächenmodul übermittelt. Dieses Zwischenmodul, oder aber ein separates Zwischenmodul, können auch dafür vorgesehen sein, vom zweiten Bedienoberflächenmodul die ersten, die auf die erste Bedienoberfläche bezogenen Eingabebefehle zu empfangen und an das erste Bedienoberflächenmodul weiterzuleiten. Das vorgenannte Zwischenmodul bzw. die vorgenannten separaten Zwischenmodule können zudem zwischen das erste und das zweite Bedienoberflächenmodul einerseits und andererseits die Eingabemittel und/oder die Ausgabemittel eingeschaltet sein. Das bzw. die Zwischenmodule sind dann sozusagen das Bindeglied zwischen den Bedienoberflächenmodulen einerseits und den Ein-/Ausgabemitteln andererseits.

Das Zwischenmodul kann die Ausgabebefehle, die vom ersten Bedienoberflächenmodul versendet werden, anhand einer Transformationstabelle modifizieren, so dass diese beispielsweise auf ein der zweiten Bedienoberfläche zugeordnetes Koordinatensystem bezogen sind. Diese Vorgehensweise ist auch in umgekehrter Richtung möglich. Auch die vom zweiten Bedienoberflächenmodul erzeugten ersten Eingabebefehle kann das Zwischenmodul vor ihrer Weiterleitung anhand der Transformationstabelle transformieren, wobei beispielsweise eine Transformation von auf die zweite Bedienoberfläche bezogenen Koordinaten auf die erste Bedienoberfläche bezogene Koordinaten stattfindet.

Die zweite Bedienoberfläche muss nicht alle Elemente der ersten Bedienoberfläche enthalten. Beispielsweise kann ein Teil der in den ersten Ausgabebefehlen enthaltenen Information zur Verwirklichung eines einfachen Bedienkonzeptes vom zweiten Bedienoberflächenmodul unterdrückt werden. Allerdings kann das zweite Bedienoberflächenmodul zu seiner zweiten Bedienoberfläche auch weitere Informationen hinzufügen, beispielsweise ein in der ersten Bedienoberfläche nicht verfügbares Hilfesystem.

Prinzipiell kann die Erfindung bei beliebigen Bedienoberflächen-Umgebungen eingesetzt werden. Es ist allerdings in einer besonders bevorzugten Variante der Erfindung vorgesehen, dass die Erfindung im Zusammenhang mit einem Netzwerk-Management-System realisiert ist, wobei das erste Bedienoberflächenmodul zur Überwachung und Steuerung einer durch das Netzwerk-Management-System verwalteten Netzwerkressource, insbesondere eines Netzelements des Netzwerks, dient.

Bei dem ersten, proprietären Bedienoberflächenmodul kann es sich prinzipiell um ein Bedienoberflächenmodul handeln, das unmittelbar mit der zu bedienenden Vorrichtung kommuniziert, beispielsweise dieser Steuerbefehle sendet oder von dieser Meldungen erhält.

Es ist in einer bevorzugten Variante der Erfindung möglich, dass das erste Bedienoberflächenmodul zur Steuerung und Überwachung einen Anwendungsmoduls, insbesondere eines Anwendungsprogramms vorgesehen ist. Das Anwendungsmodul kann beispielsweise eine Datenbankapplikation sein oder aber auch ein Steuer- und Überwachungsmodul für ein Netzelement, beispielsweise für eine Vermittlungsstelle, eine Vorfeldeinrichtung oder dergleichen.

Im Folgenden wird die Erfindung anhand mehrerer Ausführungsbeispiele unter Zuhilfenahme der Zeichnung erläutert. Es zeigen:
- Figur 1: ein erfindungsgemäßes Netzwerk-Management-System zur Verwaltung von Netzelementen NE1 bis NE3 mit Steuerrechnern IS1, IS2, AS und einem Bedienterminal C2,
- Figur 2: einen Ausschnitt aus Figur 1, in dem Komponenten des Steuerrechners IS1, insbesondere ein erfindungsgemäßes Zwischenmodul IM, ein erstes, proprietäres Bedienoberflächenmodul PUI2 und ein zweites, diesem zugeordnetes erfindungsgemäßes Bedienoberflächenmodul CUI2 gezeigt sind,

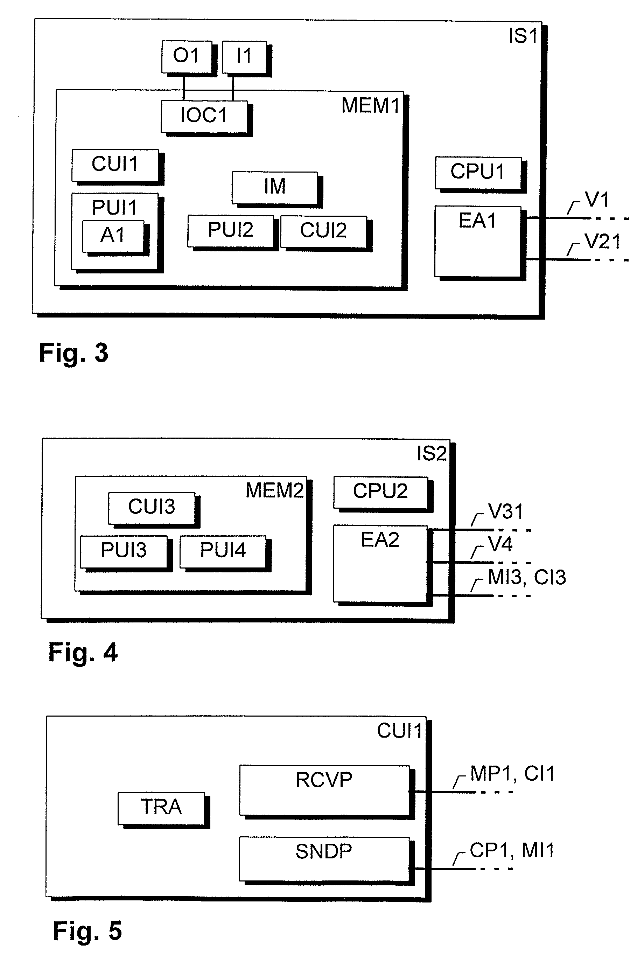

- Figur 3: den Steuerrechner IS1 gemäß Figuren 1 und 2 in schematischer, funktionaler Darstellung,
- Figur 4: den Steuerrechner IS2 gemäß Figur 1 ebenfalls in funktionaler Darstellung, und
- Figur 5: ein erfindungsgemäßes Bedienoberflächenmodul CUI1 gemäß Figur 1 in schematischer Darstellung.

Das Netzwerk-Management NMS steuert und überwacht ein Netzwerkes NW, das beispielsweise ein Telekommunikationsnetzwerk, beispielsweise ein ISDN-Telefonnetzwerk (ISDN = Integrated Services Digital Network), und/oder Rechnernetzwerk ist. Bei den Netzelementen NE1 bis NE3 handelt es sich beispielsweise um Vermittlungsstellen, Switches, Router, Workstations oder Einzelplatzrechner.

Das Netzwerk-Management-System NMS stellt an sich schon ein Rechnernetzwerk dar, da es untereinander vernetzte Steuerrechner IS1, IS2 und AS sowie einen Bedienterminal-Rechner C2 enthält. Die Rechner IS1, IS2, AS und C2 sind beispielsweise durch ein LAN und/oder ein WAN miteinander verbunden (LAN = Local Area Network, WAN = Wide Area Network). Das Netzwerk-Management-System NMS und die Netzelemente NE1 bis NE3 sind über ein separates, nicht im Einzelnen dargestelltes Steuernetzwerk miteinander verbunden, z.B. ein sogenanntes TMN (Telecommunications Management Network).

Den Netzelementen NE1, NE2, NE3 sind Anwendungsmodule A1, A2 und A3 zugeordnet, die als Steuer- und Überwachungsmodule für das jeweilige Netzelement NE1 bis NE3 ausgestaltet sind. Die Anwendungsmodule A1 bis A3 können den Netzelementen NE1, NE2 bzw. NE3 Steuerbefehle senden, beispielsweise Parametriertelegramme, und erhalten von diesen Meldungen, beispielsweise über Störungen, Auslastung oder sonstige Systemzustände des jeweiligen Netzelementes NE1, NE2 oder NE3. Zur Kommunikation zwischen den Netzelementen NE1 bis NE3 und den jeweiligen Anwendungsmodulen A1 bis A3 sind Verbindungen V1, V22 bzw. V32 vorgesehen, die beispielsweise über ein Steuer- und Überwachungsnetzwerk des Netzwerk-Management-Systems NMS führen.

Das Anwendungsmodul A1 bildet einen Bestandteil eines proprietären Bedienoberflächenmoduls PUI1, ist beispielsweise eine Unterfunktion desselben. Der Programmcode des Anwendungsmoduls A1 bzw. des Bedienoberflächenmoduls PUI1 wird vom Steuerrechner IS1 ausgeführt. Mittels des Bedienoberflächenmoduls PUI1 bzw. des darin enthaltenen Anwendungsmoduls A1 ist das Netzelement NE1 steuer- und überwachbar. Das Bedienoberflächenmodul PUI1 wird beispielsweise vom Hersteller des Netzelementes NE1 hergestellt und ist optimal auf die Erfordernisse des Netzelementes NE1 abgestimmt. Allerdings ist die Bedienoberfläche, welche vom Bedienoberflächenmodul PUI1 bereitgestellt wird, herstellerspezifisch ausgestaltet.

Die Anwendungsmodule A2, A3 sind eigenständige Programmmodule, deren Programmcode vom Steuerrechner AS ausgeführt wird. Der Steuerrechner AS ist beispielsweise eine Workstation mit Speichermitteln, einem oder mehreren als Steuermittel dienenden Prozessoren sowie Ein- und Ausgabeschnittstellen, beispielsweise einer oder mehreren Ethernet-Schnittstellenkarten. Ferner kann der Steuerrechner AS Eingabemittel, beispielsweise eine Tastatur und/oder eine Maus aufweisen. Die nicht dargestellten Steuermittel des Steuerrechners AS können den Programmcode der Anwendungsmodule A1, A2 sowie einer Datenbankapplikation DB ausführen, die ebenfalls ein Anwendungsmodul bildet. Man kann den Steuerrechner AS auch als Application Server bezeichnen. Der Steuerrechner AS weist eine verhältnismäßig hohe Rechenleistung auf und kann auch weitere, nicht dargestellte Anwendungsmodule betreiben, beispielsweise weitere Steuerund Überwachungsmodule für nicht dargestellte Netzelemente sowie sonstige Applikationen, beispielsweise auch weitere Datenbankapplikationen.

Den Anwendungsmodulen A2, A3, DB ist jeweils ein proprietäres Bedienoberflächenmodul PUI2, PUI3 bzw. PUI4 zugeordnet, mit dem das jeweilige Anwendungsmodul A2, A3 bzw. DB bedienbar ist. Das Bedienoberflächenmodul PUI2 wird vom Steuerrechner IS1, die Bedienoberflächenmodule PUI 3, PUI4 werden vom Steuerrechner IS2 betrieben, d.h., dass der jeweilige Steuerrechner IS1 bzw. IS2 den Programmcode der Bedienoberflächenmodule PUI 2 - PUI4 ausführt. Die Anwendungsmodule A2, A3, DB sind über Verbindungen V21, V31 bzw. V4 mit den ihnen jeweils zugeordneten Bedienoberflächenmodulen PUI2, PUI3 bzw. PUI4 verbunden, welche beispielsweise über ein Rechnernetzwerk, z.B. ein LAN, führen können.

Die Bedienoberflächenmodule PUI2, PUI3, PUI4 sind beim Ausführungsbeispiel abgesetzte Bedienoberflächenmodule, die man auch als Client-Module bezeichnen könnte, d.h. sie können, je nach Bedarf auf demselben Rechner betrieben werden, wie das durch sie bediente Anwendungsmodul oder, wie im vorliegenden Fall, durch separate Rechner, hier die Steuerrechner IS1, IS2.

Wie das Bedienoberflächenmodul PUI1 sind auch die Bedienoberflächenmodule PUI2 - PUI4 jeweils herstellerspezifische Bedienoberflächenmodule, die vom jeweiligen Hersteller auf die Funktionalität des zu bedienenden Anwendungsmoduls A2, A3, DB abgestimmt sind. Jedes der vier Bedienoberflächenmodule PUI1 - PUI4 erzeugt eine individuelle Bedienoberfläche, im Sinne der Erfindung eine erste Bedienoberfläche, so dass der oder die Bediener des Netzwerk-Management-Systems NMS sich jeweils auf eine individuelle, unterschiedliche Bedienoberflächengestaltung einstellen müsste, wenn er unmittelbar die Bedienoberflächen der Bedienoberflächenmodule PUI1 - PUI4 bedienen wollte. Ein Ersatz der proprietären Bedienoberflächenmodule PUI1 - PUI4 durch eines oder mehrere Bedienoberflächenmodule, die eine einheitliche Bedienoberfläche erzeugen, ist nicht oder nur sehr schwer möglich: beispielsweise ist das Anwendungsmodul A1 ein Bestandteil des Bedienoberflächenmoduls PUI1, so dass beispielsweise zur Steuerung des Netzelementes NE1 nicht nur ein Bedienoberflächenmodul programmiert werden müsste, sondern zusätzlich auch ein Anwendungsmodul A1. Die Schnittstellen zwischen den Bedienoberflächen PUI2 - PUI4 und den Anwendungsmodulen A2, A3 bzw. DB sind möglicherweise recht kompliziert ausgestaltet, beispielsweise weil Plausibilitätsprüfungen in den jeweiligen Bedienoberflächenmodulen PUI2 - PUI4 durchgeführt werden und, was erschwerend hinzukommt, werden möglicherweise vom jeweiligen Hersteller nicht offengelegt.

Daher sind beim Ausführungsbeispiel über- oder nebengeordnete, im Sinne der Erfindung zweite Bedienoberflächenmodule CUI1, CUI2 und CUI3 vorgesehen, die in logischer Hinsicht den proprietären, ersten Bedienoberflächenmodulen PUI1 - PUI4 vor- oder nebengelagert sind. Die zweiten Bedienoberflächenmodule CUI1 - CUI3 erzeugen Bedienoberflächen, die ein einheitliches (common) Aussehen aufweisen und einem einheitlichen Bedienkonzept folgen. Diese Bedienoberflächen haben sozusagen ein "common look and feel". Die von den zweiten Bedienoberflächenmodulen CUI1 bis CUI3 erzeugten Bedienoberflächen folgen einem sogenannten gemeinsamen Styleguide. Sie sind vorliegend sogenannte Graphical User Interfaces (GUI).

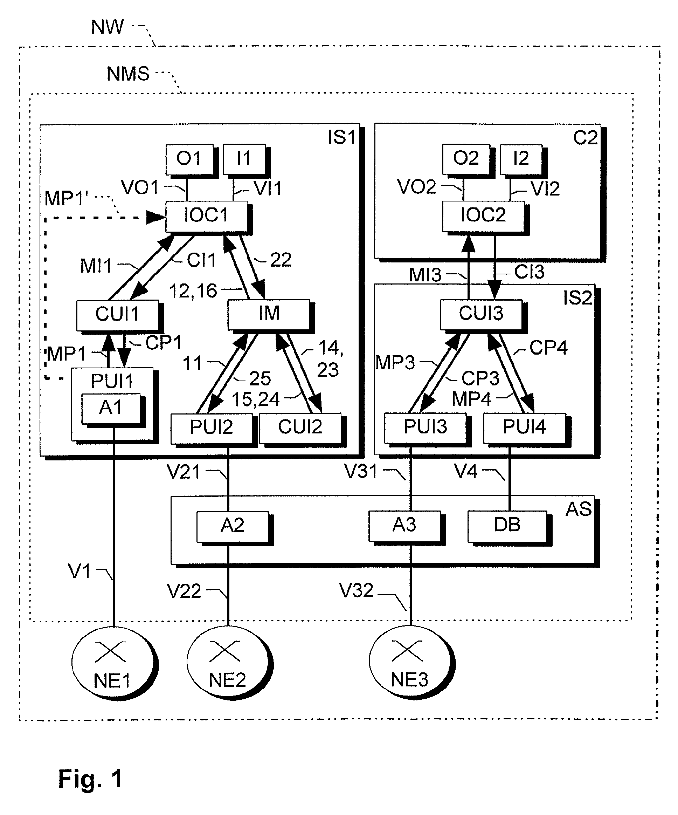

Das zweite Bedienoberflächenmodul CUI1 ist dem ersten Bedienoberflächenmodul PUI1 zugeordnet, das zweite Bedienoberflächenmodul CUI2 dem ersten Bedienoberflächenmodul PUI2 und das zweite Bedienoberflächenmodul CUI3 den beiden ersten Bedienoberflächenmodulen PUI3, PUI4. Dabei zeigt die Figur 1 drei verschiedene Ausführungsformen, wie die zweiten Bedienoberflächenmodule CUI1 - CUI3 den ersten Bedienoberflächenmodulen PUI1 - PUI4 vor- bzw. überlagert werden können:

Das zweite Bedienoberflächenmodul CUI1 ist einem einzigen ersten Bedienoberflächenmodul, dem Bedienoberflächenmodul PUI1 zugeordnet und diesem unmittelbar überlagert. Das zweite Bedienoberflächenmodul CUI2 ist ebenfalls einem einzigen Bedienoberflächenmodul PUI2 zugeordnet, vorliegend diesem nebengeordnet und mit diesem über ein Zwischenmodul IM verbunden. Das zweite Bedienoberflächenmodul CUI3 ist mehreren ersten Bedienoberflächenmodulen PUI3, PUI4 zugeordnet und diesen unmittelbar überlagert.

Das Bedienoberflächenmodul PUI1 sendet seine ersten Ausgabebefehle MP1 zur Erzeugung einer ersten, proprietären Bedienoberfläche nicht direkt an ein Ein-/Ausgabemodul IOC1, beispielsweise an einen X-Server, sondern an das zweite Bedienoberflächenmodul CUI1. Dieses erfährt auf diese Weise die vom proprietären Bedienoberflächenmodul PUI1 erzeugte Bendienoberfläche und kann in Abhängigkeit von dieser eine eigene, bedienergerechtere Bedienoberfläche erzeugen. Das Bedienoberflächenmodul CUI1 empfängt dabei über Empfangsmittel RCVP die ersten Ausgabebefehle MP1 und erzeugt beispielsweise mittels einer Transformationstabelle TRA zweite Ausgabebefehle MI1, welche sie dann mit Sendemitteln SNDP an das Ein-/Ausgabemodul IOC1 versendet. Bei den Empfangsmitteln RCVP und den Sendemitteln SNDP handelt es sich beispielsweise um Programmfunktionen.

In der Transformationstabelle TRA sind Zuordnungsregeln abgelegt, in denen beispielsweise festgelegt ist, dass eine laut den ersten Ausgabebefehlen MP1 als gelber Bildpunkt auszugebende Störungsmeldung bei der zweiten, durch das Bedienoberflächenmodul CUI1 erzeugten Bedienoberfläche ein roter, dreieckförmiger Bildschirmbereich ist.

In der Transformationstabelle TRA kann auch eine Koordinatentransformation festgelegt sein, bei der beispielsweise definiert ist, dass der vorgenannte Bildpunkt nicht in einem Bildbereich links unten, wie bei der ersten, proprietären Bedienoberfläche, sondern bei der zweiten, vom Bedienoberflächenmodul CUI1 erzeugten Bedienoberfläche in einem Bildbereich rechts oben zu erscheinen hat. Zudem ist es möglich, dass in der Transformationstabelle TRA oder einem sonstigen Speicherbereich die ersten Ausgabebefehle zumindest teilweise gespeichert werden. Beispielsweise könnte ein Ausgabebefehl MP1 mit einer Klartextmeldung so abgespeichert werden. Als zweiter Ausgabebefehl MI1 wird dann beispielsweise zunächst ein Warnpunkt oder dreieckförmiger Warnhinweis an der Bedienoberfläche ausgegeben. Erst wenn der Bediener auf diesen Hinweis klickt, wird der Klartext ausgegeben, wobei auf den Text des ersten Ausgabebefehles MP1 zurückgegriffen wird.

Das Ein-/Ausgabemodul IOC1 steuert Ausgabemittel O1, die beispielsweise Anzeigegeräte DIS1, DIS2 enthalten, bei denen es sich beispielsweise um Bildschirme handelt. Die Ausgabemittel O1 können auch Lautsprecher, Blinkleuchten, Vibrationsmelder oder dergleichen enthalten. An den Ausgabemitteln O1 können Bedienoberflächen, beispielsweise die vom Bedienoberflächenmodul CUI1 erzeugte Bedienoberfläche, ausgegeben werden, wobei beispielsweise graphische Symbole, Textelemente, Warngeräusche oder dergleichen ausgegeben werden. Das Ein-/Ausgabemodul steuert die Ausgabemittel O1 über eine Verbindung VO1, bei denen es sich beispielsweise um Verbindungskabel oder dergleichen handelt. Ferner überwacht das Ein-/Ausgabemodul IOC1 Eingabemittel 11, die beispielsweise eine Tastatur KEY sowie eine Maus MOU enthalten. Eingaben an den Eingabemitteln 11 werden über eine Verbindung VI1 an das Ein-/Ausgabemodul IOC1 gemeldet.

Wie gesagt, kann das Ein-/Ausgabemodul IOC1 ein sogenannter X-Server sein, welcher insbesondere beim Betriebssystem UNIX gebräuchlich ist. Aber auch bei anderen Betriebssystemen, beispielsweise Windows oder OS/2 sind die eigentlichen Ein- und Ausgabemittel nicht unmittelbar von Anwendungs- oder Bedienoberflächen-Programmmodulen ansteuerbar, sondern lediglich unter Mitwirkung des jeweiligen Betriebssystems, welches hierfür Ein- und Ausgabemodule enthält, die auch einen integralen Bestandteil des jeweiligen Betriebssystemen bilden können. Es versteht sich, dass zur Ansteuerung der Ausgabemittel ein separates Ausgabemodul und zur Ansteuerung der Eingabemittel ein separates Eingabemodul vorgesehen sein kann.

An der vom Bedienoberflächenmodul CUI1 erzeugten Bedienoberfläche eingegebene Eingabebefehle eines Bedieners erfasst das Ein-/Ausgabemodul IOC1 und sendet diese als (zweite) Eingabebefehle CI1 an das Bedienoberflächenmodul CUI1. Ein Eingabebefehl CI1 wird beispielsweise beim Betätigen der Tastatur KEY oder beim Klicken mit der Maus MOU auf ein Symbol der betreffenden Bedienoberfläche erzeugt. Das Bedienoberflächenmodul CUI1 empfängt die Eingabebefehle CI1 mit den Empfangsmitteln RCVP und bildet mittels der Transformationstabelle TRA (erste) Eingabebefehle CP1, welche auf die vom proprietären Bedienoberflächenmodul PUI1 erzeugte Bedienoberfläche bezogen sind.

Dabei kann das Bedienoberflächenmodul CUI1 auch Plausibilitätsprüfungen oder dergleichen vornehmen. Zudem können Bedienhandlungen bezüglich der ersten und der zweiten Bedienoberfläche unterschiedliche sein: Beispielsweise kann bei der vom Bedienoberflächenmodul CUI1 erzeugten Bedienoberfläche eine Tastatureingabe erforderlich sein, für die bei der vom proprietären Bedienoberflächenmodul PUI1 erzeugten Bedienoberfläche eine Bedienung mit der Maus MOU erforderlich wäre. Das Bedienoberflächenmodul CUI1 simuliert in einem solchen Fall die notwendige Maus-Eingabe, d.h. sie wandelt eine Tastatureingabe gemäß eines (zweiten) Eingabebefehls CI1 in einen (ersten) Eingabebefehl CP1 um, der eine Maus-Eingabe meldet.

Beim vorgenannten Beispiel wurden die Ausgabebefehle MP1 sämtlich an das Bedienoberflächenmodul CUI1 geleitet, wobei das Bedienoberflächenmodul CUI1 beispielsweise das Verhalten des Ein-/Ausgabemoduls IOC1 simuliert. Die vom ersten Bedienoberflächenmodul PUI1 erzeugte Bedienoberfläche wird dabei nicht an den Ausgabemitteln O1 ausgegeben. In einer Variante der Erfindung ist es aber auch möglich, dass die ersten Ausgabebefehle MP1 nicht nur zum Bedienoberflächenmodul CUI1, sondern auch zusätzlich als Ausgabebefehle MP1' direkt an das Ein-/Ausgabemodul IOC1. Dieses gibt entsprechend der Ausgabebefehle MP1' eine erste, dem Bedienoberflächenmodul PUI1 zugeordnete Bedienoberfläche, und entsprechend den zweiten Ausgabebefehlen MI1 eine zweite, dem Bedienoberflächenmodul CUI1 zugeordnete Bedienoberfläche aus. Beispielsweise könnte die erste Bedienoberfläche an dem Anzeigegerät DIS1 und die zweite Bedienoberfläche an dem Anzeigegerät DIS2 angezeigt werden. Es ist auch denkbar, dass die erste Bedienoberfläche in einem nicht sichtbaren, virtuellen Ausgabebereich ausgegeben wird, der bei Bedarf, beispielsweise durch eine entsprechende Bedienhandlung eines Bedieners, an einem der Anzeigegeräte DIS1 und DIS2 sichtbar gemacht werden kann.

Die Ausgabebefehle MP1 können, wie im Ausführungsbeispiel dargestellt, unmittelbar an das Bedienoberflächenmodul CUI1 gesendet werden, beispielsweise indem dem Bedienoberflächenmodul PUI1 das entsprechende Ziel für die Ausgabebefehle MP1 mitgeteilt wird. Es ist aber auch möglich, dass das Bedienoberflächenmodul PUI1 die Ausgabebefehle MP1 an das Ein-/Ausgabemodul IOC1 sendet, beispielsweise in einen Eingangspuffer des Ein-/Ausgabemoduls IOC1 einschreibt. Das Bedienoberflächenmodul CUI1 kann diesen Eingangspuffer regelmäßig überprüfen, z.B. zyklisch und/oder auf eine Eingangsmeldung des Ein-/Ausgabemoduls IOC1 beim Eingang eines Ausgabebefehles MP1 in den Eingangspuffer hin, und dabei die Ausgabebefehle MP1 auslesen. Alternativ hierzu ist es auch möglich, dass das Ein-/Ausgabemodul IOC1 die Ausgabebefehle MP1 oder Kopien von diesen an das Bedienoberflächenmodul CUI1 sendet.

Eine weitere Ausführungsform der Erfindung wird im Folgenden anhand des (zweiten) Bedienoberflächenmoduls CUI3 erläutert, welches den proprietären, ersten Bedienoberflächenmodulen PUI3, PUI4 vorgelagert ist. Im Unterschied zum Bedienoberflächenmodul CUI1 ist das Bedienoberflächenmodul CUI3 mehreren proprietären Bedienoberflächenmodulen PUI3, PUI4 vorgelagert und bildet eine gemeinsame Bedienoberfläche für diese. Der Bediener hat es also nicht mit zwei proprietären Bedienoberflächen zu tun, sondern mit einer einheitlichen Bedienoberfläche, was die Bedienung insgesamt erleichtert.

Ein weiterer Unterschied zu den Ausführungsformen im Zusammenhang mit dem Bedienoberflächenmodul CUI1 besteht darin, dass der Steuerrechner IS2 die vom Bedienoberflächenmodul CUI3 erzeugte (zweite) Bedienoberfläche nicht selbst anzeigt, sondern hierfür das Bedienterminal C2 vorgesehen ist. Bei dem Bedienterminal C2 handelt es sich beispielsweise um ein X-Terminal, das im Grunde genommen sehr einfach aufgebaut ist: Es enthält nicht dargestellte Steuermittel, beispielsweise einen Prozessor, und nicht dargestellte Speichermittel sowie Ausgabemittel O2, beispielsweise Monitore, Warnsummer oder dergleichen, und Eingabemittel 12, beispielsweise Tastatur und Maus. Die Eingabemittel 12 und die Ausgabemittel O2 werden über Verbindungen VI2 bzw. VO2 von einem Ein-/Ausgabemodul IOC2 gesteuert und überwacht, bei denen es sich beispielsweise um eine X-Server-Applikation handelt. Der Steuerrechner IS2 und das Bedienterminal C2 können örtlich weit voneinander entfernt sein. Ferner können dem Steuerrechner IS2 weitere, nicht dargestellte Bedienterminals zugeordnet sein.

Das Bedienoberflächenmodul CU13 erhält vom ersten Bedienoberflächenmodul PUI3 erste Ausgabebefehle MP3, mit denen eine dem Bedienoberflächenmodul PUI3 zugeordnete Bedienoberfläche erzeugbar ist, und vom Bedienoberflächenmodul PUI4 ebenfalls erste Ausgabebefehle MP4, mit denen eine dem Bedienoberflächenmodul PUI4 zugeordnete, proprietäre erste Bedienoberfläche erzeugbar ist. Aus den Ausgabebefehlen MP3, MP4 bildet das zweite Bedienoberflächenmodul CUI3 Ausgabebefehle MI3, beispielsweise mittels einer Transformationstabelle und/oder sonstigen Transformationsregeln. Aus den Ausgabebefehlen MI3 bildet das Ein-/Ausgabemodul IOC2 eine zweite, dem Bedienoberflächenmodul CUI3 zugeordnete Bedienoberfläche und gibt diese an den Ausgabemitteln O2 aus.

In umgekehrter Richtung meldet das Ein-/Ausgabemodul IOC2 Bedienereingaben an den Eingabemitteln 12 bezüglich der dem Bedienoberflächenmodul CUI3 zugeordneten zweiten Bedienoberfläche diesem als Eingabebefehle C13. Das Bedienoberflächenmodul CUI3 erzeugt aus den Eingabebefehlen C13 Eingabebefehle CP3 oder CP4 je nachdem, ob die jeweilige Eingabe das proprietäre, erste Oberflächenmodul PUI3 bzw. PUI4 betrifft. Auch hierfür kann die vorgenannte Transformationstabelle oder können sonstige Transformationsregeln verwendet werden. In der Transformationstabelle kann beispielsweise eingetragen sein, ob ein - beispielsweise per Maus-Doppelklick - ansprechbares Symbol oder ein Eingabefeld der vom Bedienoberflächenmodul CUI3 erzeugten Bedienoberfläche der vom proprietären Bedienoberflächenmodul PUI3 erzeugten Bedienoberfläche oder der vom proprietären Bedienoberflächenmodul PUI4 erzeugten Bedienoberfläche zugeordnet ist. Dementsprechend kann das Bedienoberflächenmodul CUI3 bei einer Eingabehandlung auf das Symbol bzw. Eingabefeld entscheiden, ob der betreffende Eingabebefehl C13 in einen Eingabebefehl CP3 für das Bedienoberflächenmodul PUI3 oder einen Eingabebefehl CP4 für das Bedienoberflächenmodul PUI4 umzuwandeln ist. Die Transformationstabelle erfüllt hierbei sozusagen auch die Funktion einer Zuordnungstabelle.

Durch die Überlagerung einer gemeinsamen Bedienoberfläche über zwei oder mehrere proprietäre Bedienoberflächen ergeben sich weitere Möglichkeiten, sowohl in Anzeigerichtung, als auch umgekehrt in Steuerrichtung: Beispielsweise kann bei einem Eingabefeld, das bei der vom Bedienoberflächenmodul PUI3 bereitgestellten Bedienoberfläche vorgesehen ist und das bei der vom Bedienoberflächenmodul CUI3 erzeugten Bedienoberfläche entsprechend dargestellt ist, eine Auswahlliste angezeigt werden, die aus der vom Bedienoberflächenmodul PUI4 bereitgestellten Bedienoberfläche entnommen ist. Die Elemente der Auswahlliste können beispielsweise von der Datenbankapplikation DB stammen. Ferner kann das Bedienoberflächenmodul CUI3 bei einem einzigen Eingabebefehl C13 einen Eingabebefehl CP3 und zugleich einen Eingabebefehl CP4 erzeugen. Ein typisches Beispiel für einen solchen Eingabebefehl könnte beispielsweise ein Anhaltebefehl sein, mit dem bei einer Störung der Betrieb der Anwendungsmodule DB und A3 bzw. des Netzelements NE3 gleichzeitig suspendiert werden soll.

Eine weitere Ausführungsform der Erfindung wird im Folgenden anhand des Bedienoberflächenmoduls CUI2 erläutert. Anders als die Bedienoberflächenmodule CUI1 und CUI3 "klinkt" sich das Bedienoberflächenmodul CUI2 nicht unmittelbar in den Datenstrom zwischen einem oder mehreren proprietären Bedienoberflächenmodulen und den Ein- bzw. Ausgabemitteln ein, sondern bedient sich hierfür eines Zwischenmoduls IM.

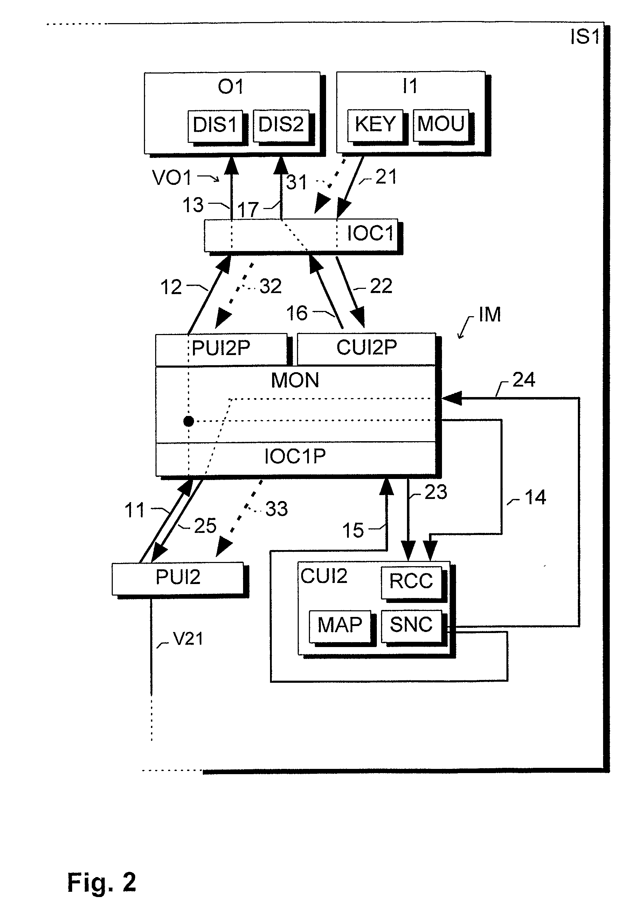

Das Zwischenmodul IM ist vorliegend ein Programmmodul, dessen Programmcode vom Steuerrechner IS1 ausgeführt wird. Das Zwischenmodul IM, dessen Details insbesondere in Figur 2 schematisch ersichtlich sind, verhält sich gegenüber den Bedienoberflächenmodulen PUI2, CUI2 wie ein Ein-/Ausgabemodul und weist hierfür Empfangs- und Sendemittel IOC1P auf. Die Empfangs- und Sendemittel IOC1P verhalten sich ähnlich wie das Ein-/Ausgabemodul IOC und können beispielsweise durch einen sogenannten X-Server-Proxy realisiert sein. Zum Ein-/Ausgabemodul IOC1 hin sind beim Zwischenmodul IM Ein-/Ausgabemittel PUI2P, die dem Bedienoberflächenmodul PUI2 zugeordnet sind und CUI2P, die dem Bedienoberflächenmodul CUI2 zugeordnet sind, vorgesehen. Die Ein-/Ausgabemittel PUI2P und CUI2P können beispielsweise durch sogenannte X-Client-Proxies realisiert sein. Das Ein-/Ausgabemittel PUI2P simuliert sozusagen das Verhalten des Bedienoberflächenmoduls PUI2 zum Ein-/Ausgabemodul IOC1 hin und das Ein-/Ausgabemittel CUI2P das Verhalten des Bedienoberflächenmoduls CUI2. Zwischen das Sende- und Empfangsmittel IOC1 P einerseits und die Sende- und Empfangsmittel PUI2P, CUI2P andererseits ist ein Kopplungs- und Kopiermittel MON geschaltet, welches Nachrichten zwischen den Sende- und Empfangsmitteln IOC1P, PUI2P und CUI2P vermittelt und gegebenenfalls als Kopien weiterleitet, wie im Folgenden noch näher erläutert wird.

Aus der X-Window-Welt kennt man einen sogenannten X-Monitor-Daemon, der wie das Kopplungs- und Kopiermittel MON zwischen einen X-Server-Proxy einerseits und einen einzigen X-Client-Proxy andererseits geschaltet ist, um die Kommunikation zwischen einem einzigen X-Client und einem X-Server zu überwachen. Das in Figur 2 dargestellte Zwischenmodul IM lehnt sich an dieses Konzept an, das allerdings erfindungsgemäß modifiziert und weitergebildet ist, wie aus der nachfolgenden Erläuterung der Funktion des Zwischenmoduls IM deutlich wird:

Das proprietäre Bedienoberflächenmodul PUI2 sendet in Ausgaberichtung Ausgabebefehle 11 zur Erzeugung einer Bedienoberfläche an das Zwischenmodul IM. Dieses leitet die Ausgabebefehle 11 als Ausgabebefehle 12 an das Ein-/Ausgabemodul IOC1, wie gesagt beispielsweise ein X-Server, welches aus den Ausgabebefehlen 12 Steuerbefehle 13 erzeugt und an die Ausgabemittel O1 sendet. Beispielsweise wird auf diese Weise ein Symbol am Anzeigegerät DIS1 angezeigt. Das Zwischenmodul IM kann die Ausgabebefehle 11 unmodifiziert oder auch beispielsweise anhand einer Koordinatentransformation modifiziert als die Ausgabebefehle 12 an das Ein-/Ausgabemodul IOC1 leiten. Vorliegend kopiert das Zwischenmodul IM die Ausgabebefehle 11 und leitet sie als Ausgabebefehle 14 an das (zweite) Bedienoberflächenmodul CUI2, welches die Ausgabebefehle 14 mit seinen Empfangsmitteln RCC empfängt. Mittels einer Transformationstabelle MAP und/oder sonstigen Transformationsregeln erzeugt das Bedienoberflächenmodul CUI2 aus den Ausgabebefehlen 14 Ausgabebefehle 15 und sendet diese mittels Sendemitteln SNC an das Zwischenmodul IM. Die Ausgabebefehle 15 dienen zur Ausgabe einer zweiten, dem Bedienoberflächenmodul CUI2 zugeordneten Bedienoberfläche und werden vom Zwischenmodul IM unmodifiziert oder gegebenenfalls koordinatentransformiert als Ausgabebefehle 16 an das Ein-/Ausgabemodul IOC1 übermittelt. Dieses sendet entsprechend den Ausgabebefehlen 16 Ausgabebefehle 17 an die Ausgabemittel O1, wobei beispielsweise ein Bildpunkt an Anzeigegerät DIS2 ausgegeben wird. In diesem Zusammenhang sei erwähnt, dass das Zwischenmodul IM die Ausgabebefehle 11 auch lediglich an das Bedienoberflächenmodul CUI2 weiterleiten, die Ausgabebefehle 12 hingegen unterdrücken kann.

In umgekehrter Richtung, in Steuerrichtung, funktioniert das Verfahren sinngemäß ähnlich: An den Eingabemitteln 11 gegebene Eingabebefehle 21 bezüglich der zweiten Bedienoberfläche übermittelt das Ein-/Ausgabemodul IOC1 als Eingabebefehle 22 an das Zwischenmodul IM. Dieses leitet die Eingabebefehle 22 modifiziert, gegebenenfalls auch koordinatentransformiert, an die Empfangsmittel RCC des Bedienoberflächenmoduls CUI2 weiter. Das Bedienoberflächenmodul CUI2 erzeugt aus den (zweiten) Eingabebefehlen 23 (erste) Eingabebefehle 24, beispielsweise unter zur Hilfenahme der Transformationstabelle MAP, und sendet diese mittels der Sendemittel SNC an das Zwischenmodul IM. Die Eingabebefehle 24 sind auf die erste, vom Bedienoberflächenmodul PUI2 erzeugte Bedienoberfläche bezogen und werden vom Zwischenmodul IM an das Bedienoberflächenmodul PUI2 als Eingabebefehle 25 weitergeleitet. Auch hierbei kann das Zwischenmodul IM gegebenenfalls eine Koordinatentransformation vornehmen. Entsprechend den jeweils empfangenen Eingabebefehlen 25 gibt das Bedienoberflächenmodul PUI2 beispielsweise einen Steuerbefehl auf der Verbindung V21 an das Anwendungsmodul A2.

In gestrichelten Linien ist in Figur 2 eine weitere Variante eingezeichnet: An den Eingabemitteln I1 können auch Eingabebefehle 31 bezüglich der ersten, dem Bedienoberflächenmodul PUI2 zugeordneten Bedienoberfläche gemacht werden. Die Eingabebefehle 31 leitet das Ein-/Ausgabemodul IOC1 als Eingabebefehle 32 an das Zwischenmodul IM weiter. Das Zwischenmodul IM gibt die Eingabebefehle 32 als Eingabebefehle 33 an das Bedienoberflächenmodul PUI2 weiter, welches dann entsprechend das Anwendungsmodul A2 steuern kann. Das Anwendungsmodul A2 ist sowohl über die proprietäre, vom Bedienoberflächenmodul PUI2 bereitgestellte erste Bedienoberfläche als auch über die zweite, ein "common look and feel" bietende zweite Bedienoberfläche des Bedienoberflächenmoduls CUI2 bedienbar.

Es versteht sich, dass an das Zwischenmodul IM prinzipiell auch weitere proprietäre (erste) Bedienoberflächenmodule und/oder neben dem Bedienoberflächenmodul CUI2 weitere zweite Bedienoberflächenmodule angeschlossen sein können. Beispielsweise könnte das Bedienoberflächenmodul CUI2 neben dem Bedienoberflächenmodul PUI2 auch weitere, nicht dargestellte proprietäre erste Bedienoberflächenmodule unter einer gemeinsamen Bedienoberfläche bedienbar machen.

Bei den Steuerrechnern IS1, IS2 kann es sich um an sich bekannte Steuerrechner handeln, die beispielsweise Steuermittel CPU1 bzw. CPU2, z.B. Prozessoren oder Prozessoranordnungen, Speichermittel MEM1 bzw. MEM2, beispielsweise RAM-Speicher (RAM = Random Access Memory), Festplattenlaufwerke oder dergleichen, sowie Ein-/Ausgabemittel EA1 bzw. EA2, beispielsweise LAN-Schnittstellenkarten oder dergleichen, enthalten. Die Steuerrechner IS1, IS2 können auch weitere, nicht dargestellte Komponenten aufweisen, beispielsweise Tastatur und Bildschirm (beim Steuerrechner IS1 sind dies z.B. die Ausgabemittel O1 und die Eingabemittel 11. Die Steuermittel CPU1, CPU2 führen Programmcode von Programmmodulen aus, die in den Speichermitteln MEM1 bzw. MEM2 abgelegt sind. Beim Steuerrechner IS1 sind dies die Programmmodule CUI1, CUI2, PUI2, PUI1 und IM sowie das Ein-/Ausgabemodul IOC1. Beim Steuerrechner IS2 sind dies die Module CUI3, PUI3, PUI4. Nicht dargestellt ist bei den Steuerrechnern IS1, IS2 jeweils ein Betriebssystem, beispielsweise UNIX oder Windows-NT, das die Funktionen des jeweiligen Steuerrechners IS1, IS2 steuert und überwacht.

Weitere Varianten der Erfindung sowie beliebige Kombinationen der in den Ansprüchen sowie in der Beschreibung angegebenen Maßnahmen sind ohne Weiteres möglich.

Beispielsweise könnte das Ein-/Ausgabemodul IOC1 ein integraler Bestandteil des Betriebssystems des Steuerrechners IS1 sein.

Jedes der Bedienoberflächenmodule CUI1-CUI3 könnte weitere, nicht dargestellte proprietäre Bedienoberflächenmodule unter einer gemeinsamen Bedienoberfläche vereinen.

Statt der Bedienoberflächenmodule CUI1-CUI3 könnte ein einziges Bedienoberflächenmodul vorgesehen sein, das die Funktionen aller Bedienoberflächenmodule CUI1-CUI3 ganz oder teilweise unter einer gemeinsamen Bedienoberfläche bereitstellt.

Das erfindungsgemäße Konzept ist kaskadierbar: auch den Bedienoberflächenmodulen CUI1-CUI3 könnte zumindest ein weiteres Bedienoberflächenmodul zugeordnet sein, das eine Bedienoberfläche bereitstellt, mit der die Bedienoberflächenmodule CUI1-CUI3 auf die erfindungsgemäße Weise beispielsweise über eine einzige übergeordnete Bedienoberfläche bedienbar sind.

Das Ein-/Ausgabemodul IOC1 sowie die Ein- und Ausgabemittel O1, I1 könnten Bestandteil eines vom Steuerrechner IS1 separaten Bedienterminals (vgl. C2) sein.

Anders als in der Beschreibung können die erfindungsgemäßen Bedienoberflächenmodule CUI1, CUI2, CUI3 sowie das Zwischenmodul IM zumindest teilweise auch in Hardware ausgeführt sein. Dabei ist es auch möglich, dass ein Rechner, insbesondere ein Terminal-Rechner, ein erfindungsgemäßes Bedienoberflächenmodul bildet. Beispielsweise könnte ein Rechner vorgesehen sein, der ähnlich wie das Bedienterminal C2 aufgebaut ist und zudem die Funktionen des Bedienoberflächenmoduls CUI3 ausführt.

Das Zwischenmodul IM könnte beispielsweise ein Bestandteil eines erfindungsgemäß modifizierten Betriebssystems des Steuerrechners IS1 sein.

Eine Trennung von Anwendungsmodul und proprietärem Bedienoberflächenmodul ist zur Ausführung der Erfindung nicht zwingend notwendig, wie am Beispiel des Bedienoberflächenmoduls PUI1 deutlich wird.

Ferner ist es denkbar, dass beispielsweise das Bedienoberflächenmodul PUI1 einen Bestandteil des Netzelements NE1 bildet, insbesondere unmittelbar von diesem betrieben wird.

Das erfindungsgemäße Konzept ist nicht nur bei X-Window, insbesondere nicht nur unter UNIX anwendbar, sondern auch unter beliebigen anderen Betriebssystemumgebungen, beispielsweise Windows-NT oder dergleichen. Beim jeweiligen Betriebssystem können gegebenenfalls Modifikationen vorgenommen werden, so dass dieses beispielsweise die Funktionen eines Zwischenmoduls IM durchführen kann. Eine X-Window-Umgebung oder eine ähnliche, funktional ähnlich gegliederte Umgebung ist lediglich insofern bevorzugt, als eine klare Trennung zwischen X-Server und X-Client vorgesehen ist, so dass eine erfindungsgemäße (zweite) Bedienoberfläche leicht angekoppelt werden kann.

## Patentansprüche

1. Verfahren zur Bedienung eines ersten Bedienoberflächenmoduls (PUI1-PUI4), das erste Ausgabebefehle (MP1, 11, MP3, MP4) zur Ausgabe einer ersten Bedienoberfläche an Ausgabemitteln (O1, O2) erzeugen und auf die erste Bedienoberfläche bezogene Eingabebefehle empfangen kann, **dadurch gekennzeichnet,**
- **dass** die ersten Ausgabebefehle (MP1, 11, MP3, MP4) oder Kopien von diesen an ein zweites Bedienoberflächenmodul (CUI1-CUI3) übermittelt werden,
- **dass** das zweite Bedienoberflächenmodul (CUI1-CUI3) in Abhängigkeit von den ersten Ausgabebefehlen (MP1, 11, MP3, MP4) zweite Ausgabebefehle (MI1, 16, MI3) zur Ausgabe einer zweiten Bedienoberfläche an den Ausgabemitteln (O1, O2) erzeugt,
- **dass** das zweite Bedienoberflächenmodul (CUI1-CUI3) von Eingaben eines Bedieners an Eingabemitteln (11, 12) abhängige und auf die zweite Bedienoberfläche bezogene zweite Eingabebefehle (CI1, 23, CI3) empfängt,
- **dass** das zweite Bedienoberflächenmodul (CUI1-CUI3) in Abhängigkeit von den zweiten Eingabebefehlen (CI1, 23, CI3) auf die erste Bedienoberfläche bezogene erste Eingabebefehle (CP1, 24, CP3, CP4) erzeugt, und
- **dass** die ersten Eingabebefehle (CP1, 24, CP3, CP4) an das erste Bedienoberflächenmodul (PUI1-PUI4) übermittelt werden.

2. Verfahren nach Anspruch 1, **dadurch gekennzeichnet, dass** die die erste Bedienoberfläche betreffenden ersten Ausgabebefehle (MP1, 11, MP3, MP4) zumindest teilweise modifiziert und/oder abgefangen und verworfen werden, so dass die erste Bedienoberfläche nicht oder nur eingeschränkt von den Ausgabemitteln (O1, O2) ausgegeben wird.

3. Verfahren nach Anspruch 1, **dadurch gekennzeichnet, dass** die Ausgabemittel (O1, O2) und/oder diesen zugeordnete Ressourcen vorrangig für das zweite Bedienoberflächenmodul (CUI1-CUI3) bereitgestellt werden.

4. Verfahren nach Anspruch 1, **dadurch gekennzeichnet, dass** die Ausgabemittel (O1, O2) durch ein Ausgabemodul (IOC1, IOC2) gesteuert werden und dass die zweiten Ausgabebefehle (MI1, 16, MI3) an das Ausgabemodul (IOC1, IOC2) übermittelt werden.

5. Verfahren nach Anspruch 1, **dadurch gekennzeichnet, dass** die Eingabemittel (11, 12) durch ein Eingabemodul (IOC1, IOC2) überwacht werden und dass das Eingabemodul die auf die zweite Bedienoberfläche bezogenen zweiten Eingabebefehle (CI1, 23, CI3) an das zweite Bedienoberflächenmodul (CUI1-CUI3) übermittelt.

6. Verfahren nach Anspruch 1, **dadurch gekennzeichnet, dass** zwischen das erste und das zweite Bedienoberflächenmodul (CUI1-CUI3) (PUI1-PUI4; CUI1-CUI3) ein Zwischenmodul (IM) geschaltet wird, das die ersten Ausgabebefehle (MP1, 11, MP3, MP4) von dem ersten Bedienoberflächenmodul (PUI1-PUI4) empfängt und das die ersten Ausgabebefehle (MP1, 11, MP3, MP4) oder Kopien von diesen an das zweite Bedienoberflächenmodul (CUI1-CUI3) übermittelt und/oder das von dem zweiten Bedienoberflächenmodul (CUI1-CUI3) die ersten Eingabebefehle (CI1, 23, CI3) empfängt und an das erste Bedienoberflächenmodul (PUI1-PUI4) weiterleitet.

7. Verfahren nach Anspruch 6, **dadurch gekennzeichnet, dass** das Zwischenmodul (IM) zwischen das erste und das zweite Bedienoberflächenmodul (CUI1-CUI3) einerseits und andererseits die Eingabemittel (11, 12) und/oder die Ausgabemittel (O1, O2) geschaltet wird.

8. Verfahren nach Anspruch 1, **dadurch gekennzeichnet, dass** es durch ein ein Netzwerk (NW) überwachendes und steuerndes Netzwerk-Management-System (NMS) durchgeführt wird, wobei das erste Bedienoberflächenmodul (PUI1-PUI4) zur Überwachung und Steuerung einer durch das Netzwerk-Management-System (NMS) verwalteten Netzwerkressource (NE1-NE3; DB), insbesondere eines Netzelementes (NE1-NE3), des Netzwerks (NW) dient.

9. Verfahren nach Anspruch 1, **dadurch gekennzeichnet, dass** das erste Bedienoberflächenmodul (PUI1-PUI4) zur Steuerung und Überwachung eines Anwendungsmoduls (A1-A3, DB), insbesondere einer Datenbank-Applikation (DB) und/oder eines Steuer- und Überwachungsmoduls (A1-A3) für ein Netzelement (NE1-NE3), vorgesehen ist.

10. (Zweites) Bedienoberflächenmodul (CUI1-CUI3) zur Bedienung eines ersten Bedienoberflächenmoduls (PUI1-PUI4), das erste Ausgabebefehle (MP1, 11, MP3, MP4) zur Ausgabe einer ersten Bedienoberfläche an Ausgabemitteln (O1, O2) erzeugen und auf die erste Bedienoberfläche bezogene Eingabebefehle empfangen kann, **dadurch gekennzeichnet,**
- **dass** es Empfangsmittel (RCC; RCVP) zum Empfangen der ersten Ausgabebefehle (MP1, 11, MP3, MP4) oder von Kopien von diesen aufweist,
- **dass** es Erzeugungs- und Sendemittel (TRA, SNDP; MAP, SNC) zum Erzeugen und Senden zweiter Ausgabebefehle (MI1, 16, MI3 ) in Abhängigkeit von den ersten Ausgabebefehlen (MP1, 11, MP3, MP4) zur Ausgabe einer zweiten Bedienoberfläche an den Ausgabemitteln (O1, O2) aufweist,
- **dass** die Empfangsmittel (RCC; RCVP) zum Empfangen von auf die zweite Bedienoberfläche bezogenen zweiten Eingabebefehlen (CI1, 23, CI3) ausgestaltet sind, und
- **dass** die Erzeugungs- und Sendemittel (TRA, SNDP; MAP, SNC) zum Erzeugen und Senden auf die erste Bedienoberfläche bezogenen ersten Eingabebefehlen (CP1, 24, CP3, CP4) in Abhängigkeit von den zweiten Eingabebefehlen (CI1, 23, CI3) ausgestaltet sind.

11. Zwischenmodul (IM) zur Bedienung eines ersten Bedienoberflächenmoduls (PUI2), das erste Ausgabebefehle (11) zur Ausgabe einer ersten Bedienoberfläche an Ausgabemitteln (O1) erzeugen und das auf die erste Bedienoberfläche bezogene Eingabebefehle empfangen kann, **dadurch gekennzeichnet,**
- **dass** es Empfangsmittel (IOC1P) zum Empfangen der ersten Ausgabebefehle (11) aufweist, und
- **dass** es Sendemittel (MON) zum Senden der ersten Ausgabebefehle (11) oder von Kopien (14) von diesen an ein zweites Bedienoberflächenmodul (CUI2) aufweist, so dass dieses in Abhängigkeit von den ersten Ausgabebefehlen (11, 14) zweite Ausgabebefehle (16 ) zur Ausgabe einer zweiten Bedienoberfläche an den Ausgabemitteln (O1, O2) erzeugen kann.

12. Zwischenmodul (IM) zur Bedienung eines ersten Bedienoberflächenmoduls (PUI2), das erste Ausgabebefehle (11) zur Ausgabe einer ersten Bedienoberfläche an Ausgabemitteln (O1) erzeugen und das auf die erste Bedienoberfläche bezogene Eingabebefehle empfangen kann, **dadurch gekennzeichnet, dass** es Empfangsmittel (MON) zum Empfangen von durch ein zweites Bedienoberflächenmodul (CUI2) gesendeten, auf die erste Bedienoberfläche bezogenen ersten Eingabebefehlen (24) aufweist, die das zweite Bedienoberflächenmodul (CUI2) in Abhängigkeit von zweiten, auf die zweite Bedienoberfläche bezogenen Eingabebefehlen (22, 23) erzeugt hat, und dass es Sendemittel (MON, IOC1P) zum Senden der ersten Eingabebefehle (25) an das erste Bedienoberflächenmodul (PUI2) aufweist.

13. Netzwerk-Management-System (NMS) oder Rechner eines Netzwerk-Management-Systems (IS1, IS2), **gekennzeichnet durch** ein Bedienoberflächenmodul (CUI1-CUI3) nach Anspruch 10 und/oder ein Zwischenmodul (IM) nach Anspruch 11 und/oder ein Zwischenmodul (IM) nach Anspruch 12.

14. Bedienoberflächenmodul (CUI1-CUI3) nach Anspruch 10 oder Zwischenmodul (IM) nach Anspruch 11 oder Zwischenmodul (IM) nach Anspruch 12, **dadurch gekennzeichnet, dass** es Programmcode enthält, der von einem Steuermittel eines Rechners, insbesondere eines Rechners (IS1, IS2) eines Netzwerk-Management-Systems (NMS), ausgeführt werden kann.

15. Speichermittel, insbesondere Diskette oder CD-ROM, Digital Versatile Disc, Festplattenlaufwerk oder dergleichen, mit einem darauf gespeicherten Bedienoberflächenmodul (CUI1-CUI3) nach Anspruch 14 und/oder einem darauf gespeicherten Zwischenmodul (IM) nach Anspruch 14.
